# EUROPEAN PATENT APPLICATION

(11) **EP 4 575 577 A1**
(43) Date of publication of application: **25.06.2025**
(21) Application number: 23383351.6
(22) Date of filing: 21.12.2023
(51) Int. Cl.: G01S 13/90, G06V 20/13, G06V 20/10

(54) **METHOD, SYSTEM AND COMPUTER PROGRAMS FOR ESTIMATING BIOPHYSICAL PARAMETERS OF FORESTS**

(71) Applicant: Universitat Politècnica De Catalunya, 08034 Barcelona (ES); Institut d'Estudis Espacials de Catalunya (IEEC), 08034 Barcelona (ES)
(72) Inventor: LÓPEZ MARTÍNEZ, Carlos, 08940 Cornellà de Llobregat (ES); HERRERA GIMENEZ, Marc, 08280 Calaf (ES)
(74) Representative: Torner, Juncosa I Associats, SL

(57) **Abstract**

A method, system, and computer programs for estimating biophysical parameters of forests are proposed. The method comprises: obtaining image acquisitions of a given area comprising forests from a data source, the image acquisitions comprising synthetic aperture radar, SAR, single look complex, SLC, images and being temporally spaced with each other; generating a stack of geocoded coherences images by submitting the obtained image acquisitions to a multitemporal SAR data processing procedure; selecting, for each geocoded coherence image in the generated stack, a number of sub-areas of the given area; grouping each of the selected sub-areas into a plurality of sub-area geocoded coherence stacks; spatially averaging each geocoded coherence image in the sub-area geocoded coherence stacks using a spatial averaging technique, obtaining a plurality of vectors as a result; and computing a parameter that depends on forest biophysical parameters by executing a temporal decorrelation model on the obtained plurality of vectors.

## Description

### TECHNICAL FIELD

The present invention relates to methods and systems for estimating biophysical parameters of forests, particularly, based on the temporal decorrelation of Synthetic Aperture Radar (SAR) data.

### BACKGROUND OF THE INVENTION

Some methods and systems for estimating biophysical parameters of forests are known.

For example, US11454534-B2 discloses a method of optical and microwave synergistic retrieval of aboveground biomass. The method includes: obtaining an observation value of aboveground biomass (AGB) of a sample plot; pre-processing laser radar (LiDAR) data, optical remote sensing data and microwave remote sensing data covering a research region, to yield crown height model (CHM) data, surface reflectance data and a backscattering coefficient, respectively; extracting different LiDAR variables, extracting a plurality of optical characteristic vegetation indexes, and extracting a plurality of microwave characteristic variables; establishing a multiple stepwise linear regression model of the biomass; taking the biomass value of the LiDAR data coverage region as a training set and a verification sample set, and selecting samples for modeling and verification; screening out the optical and microwave characteristic variables; and constructing an optical model, a microwave model, and an optical and microwave synergistic model of AGB retrieval, respectively.

CN104361592 discloses a method and device for estimating forest above-ground biomass. In this method, the perpendicular distribution of the relative reflectivity of pixels is estimated for a pair of preprocessed polarization interference SAR images by using a Legendre expansion equation of multiple correlation of the pixels in the perpendicular direction. Moreover, scattering type distinguishing is conducted on all the pixels in the preprocessed main image areas formed by all volume scattering type pixels in the image are regarded as forest areas, and object-oriented partition is conducted, so that a plurality of polygon forest stands representing homogeneity forest objects are obtained. For all the polygon forest stands, average relative reflectivity perpendicular structural sections are calculated respectively, and parameterized processing is conducted on the average relative reflectivity perpendicular structural sections. A multi-element linear forest above-ground biomass estimation model is established according to multiple obtained parameters, and the forest above-ground biomass of the polygon forest stands is calculated through the multi-element linear forest above-ground biomass estimation model.

CN110287457 discloses an inversion calculation method based on satellite radar remote sensing data. The method comprises preprocessing an image; firstly, extracting VH and VV polarization backscattering coefficients corresponding to corn biomass on-site measurement points; acquiring a water cloud model through a fitting mode; substituting the corn biomass with a plurality of selected points into the model water cloud to obtain a plurality of VH and VV polarization backscattering coefficients; and training by adopting a random forest algorithm to obtain a regression model of the mapping relation between the characteristic matrix and the label value, and inputting the VH and VV polarization backward scattering coefficients of the to-be-measured point into the model to measure and calculate the corn biomass of the measurement point.

CN113205475 discloses a forest height inversion method based on multi-source satellite remote sensing data. According to this document, satellite-borne SAR and an optical image are combined, and the method comprises: firstly, carrying out polarization processing on an SAR image to obtain a backscattering coefficient and an incident angle of the whole image; acquiring phases, coherence and a digital elevation model (DEM) of a main image and an auxiliary image by utilizing an InSAR measurement technology; extracting gradient information from the DEM, then calculating biophysical variables and spectral vegetation indexes based on a multispectral image; and associating field measurement, polarization information, interference measurement, biophysical variables, spectral vegetation indexes and topographic variables by using a machine learning algorithm.

CN112882020 discloses a mountain forest tree height estimation method based on multitemporal synthetic aperture radar data. The method comprises preprocessing data obtained by a sensor, and obtaining a radar single-view complex image which can be used for interference measurement; performing registration, interference and phase unwrapping on an image obtained after data preprocessing; combining the unwrapped phase and the high-precision baseline parameters to obtain elevation information of the earth surface; and subtracting the DEM of the earth surface from the reconstructed DEM to obtain the height of the trees in the forest.

CN109472304 discloses a tree species classification method, device and equipment based on SAR and optical remote sensing time sequence data, and the method comprises the steps: selecting a part of forest classes in a research region as a training region in advance, taking the rest forest classes as verification data, and collecting the optical remote sensing image time sequence data and the SAR image time sequence data according to the training data; preprocessing the optical remote sensing image data and the SAR image data, and performing feature extraction respectively to obtain forest shift time sequence change features; performing clustering analysis on the time sequence change characteristics, and establishing a tree species classification system; according to the multi-feature decision tree model and the tree classification system, constructing a decision rule of a single classification time sequence feature index or a multi-classification feature index, and according to the decision rule, carrying out step-by-step classification on the tree species in the predetermined area to obtain a tree species decision tree classification model; verifying the result of the tree species decision tree classification model according to the verification data, evaluating the precision, and adjusting the decision tree threshold value according to the precision evaluation result to update the tree species decision tree classification model; and extracting a tree species distribution map according to the updated tree species decision tree classification model.

### DESCRIPTION OF THE INVENTION

The object of present invention is thus to provide a new solution for the estimation of biophysical parameters of forests based on the temporal decorrelation of SAR data.

This object is fulfilled by a method with the characteristics of claim 1 and by a computing system and computer program with the features of claims 9 and 14.

To that end, the present invention provides, according to one aspect, a method for estimating biophysical parameters of forests, the method comprising performing by one or more processors the following steps: obtaining image acquisitions of a given area comprising forests from at least one data source, the image acquisitions comprising synthetic aperture radar (SAR) single look complex (SLC) images and being temporally spaced with each other; generating a stack of geocoded coherences images by submitting the obtained image acquisitions to a multitemporal SAR data processing procedure; selecting, for each geocoded coherence image in the generated stack, a number of sub-areas of the given area; grouping each of the selected sub-areas into a plurality of sub-area geocoded coherence stacks; spatially averaging each geocoded coherence image in the sub-area geocoded coherence stacks using a spatial averaging technique, obtaining a plurality of vectors as a result; and computing a parameter that depends on forest biophysical parameters by executing a temporal decorrelation model on the obtained plurality of vectors.

In some embodiments, the computed parameter is a decay coefficient of the temporal decorrelation model, and the forest biophysical parameter comprises a forest height, an above-ground biomass and/or a growing stock volume.

In some embodiments, the temporal decorrelation model is a negative exponential model.

In some embodiments, the multitemporal SAR data processing procedure comprises generating a coregistered stack by preprocessing the obtained image acquisitions; calculating the complex conjugate products of all pairs of preprocessed image acquisitions in the coregistered stack, generating a covariance matrix as a result; filtering each element of the generated covariance matrix using a filtering technique; generating a coherences stack of coherence images by calculating the coherence images using combinations of the filtered elements; and geocoding the coherence images in the coherence stack using a reference system.

In some embodiments, the filtering technique comprises a speckle noise filter.

In some embodiments, the method further comprises adapting the speckle noise filter depending on a ratio between a horizontal and vertical temporal extent of the image acquisitions.

In some embodiments, the spatial averaging technique comprises executing at least one of an arithmetical median and arithmetical mean.

In some embodiments, the temporal extent between each of the image acquisitions comprises a given number of hours, days, weeks, or months.

Other embodiments of the invention that are disclosed herein also include a computing system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:

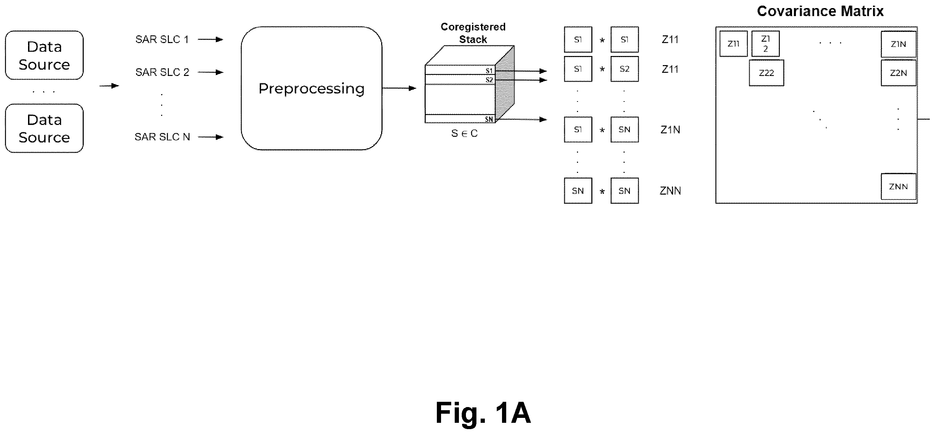

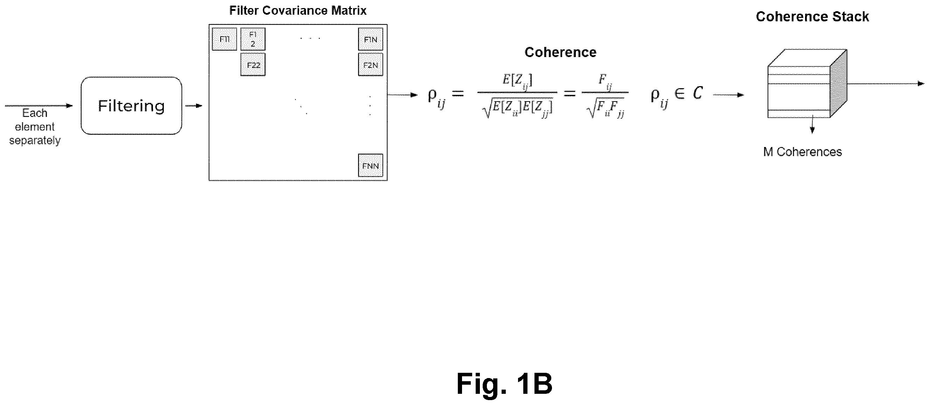

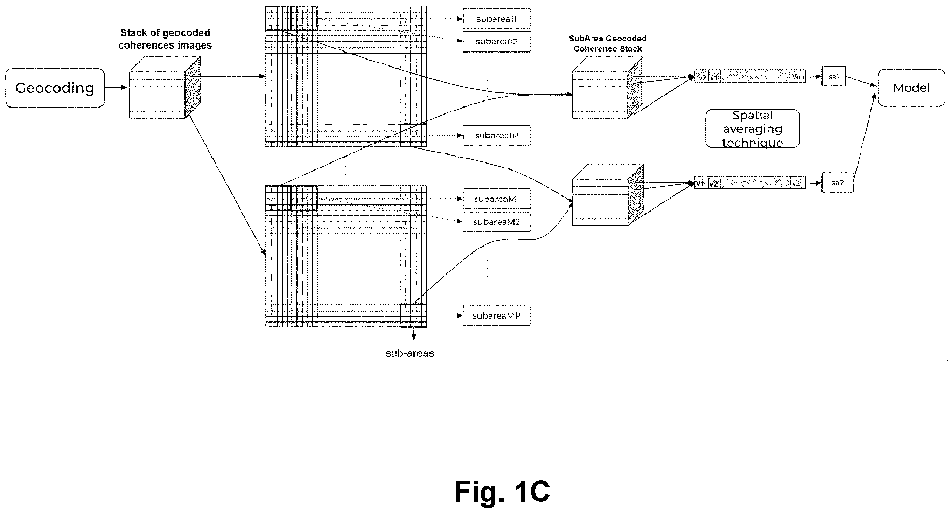

Figs. 1A-1C schematically illustrate the different processes that can be implemented by the proposed method for estimating biophysical parameters of forests. Please note that Fig. 1B is a continuation of Fig. 1A, and Fig. 1C is a continuation of Fig. 1B.

### DETAILED DESCRIPTION OF THE INVENTION AND OF PREFERRED EMBODIMENTS

The present invention provides a method and a system (comprising at least one memory and one or more processors) for estimating biophysical parameters of forests.

As seen in Fig. 1C, first, various Synthetic Aperture Radar (SAR) Single Look Complex (SLC) data acquisitions are obtained from one or more data sources. Please note that the acquisitions can be obtained for any desired area where the estimation is required. Particularly, the acquisitions are temporally spaced, meaning that a certain amount of time elapses between one system acquisition and the next over the same area, with the minimum time gap possible based on the data source(s). The number of acquisitions used is thus linked to the temporal extent, whether it is longer or shorter; more acquisitions correspond to a longer temporal extent.

Next, the different images acquisitions undergo a multitemporal SAR data processing procedure to generate a stack of geocoded coherences images (Fig. 1C). From this stack, the method entails the selection of several sub-areas for each geocoded coherence image. In certain embodiments, the dimensions of each sub-area for all test sites may be an overlapping or non-overlapping window of a specified pixel size (e.g., 11x11 pixels, among others). However, the precise count of sub-areas will be influenced by the size of each test site, with larger test sites accommodating a greater number of sub-areas. Moreover, the number of sub-areas don't need to be standardized across all sub-areas.

Each of the sub-areas is then grouped into individual stacks (the sub-area geocoded coherence stacks as referred to in Fig. 1C), with a total number of acquisitions per stack, corresponding to the number of images that formed the initial stack of geocoded coherences images. Moreover, each image within these sub-stacks is spatially averaged. For instance, in some embodiments, this can be done using the arithmetical median and/or the arithmetical mean as the spatial averaging technique for the sub-stacks. Nevertheless, in other embodiments, different and more complex spatial averaging techniques can be equally used. This step results in a plurality of vectors with a given number of elements in each vector, and where each element corresponds to the spatially averaged coherence of its sub-area.

These vectors are then introduced into a model based on temporal decorrelation that computes a parameter that depends on forest biophysical parameters such as tree height, growing stock volume, and above-ground biomass. These last two parameters are a proxy for biomass, and the tree height can be directly related to biomass through the allometric equations.

In some particular embodiments, the computed parameter is a decay coefficient of the temporal decorrelation model, more specifically, the negative exponential model. In some other embodiments, the temporal decorrelation model takes into account an attenuation factor (or decay coefficient), a base limit coherence level and the temporal extent between acquisitions.

With regard to the multitemporal SAR data processing procedure it comprises the generation of a coregistered stack from all the acquisition by preprocessing the image acquisitions (see Fig. 1A). The preprocessing steps can be uniform for all test sites. In a particular embodiment, it begins with applying orbital information to acquire comprehensive orbital details about the mission. Following this, a split operation selects the specific interferometric wide area where the study zone is located, and calibration, though optional, may be performed. The data is then coregistered, and the stack of image acquisitions is compiled. Subsequently, if needed, debursting of the data is conducted, and if necessary, a subset operation trims and exports only the desired area. The resulting stack can be exported as a given format file, such as a TIFF file, using the software that was employed for all the mentioned initial preprocessing steps.

From each of these preprocessed acquisitions, the complex conjugate products of all pairs are then calculated, forming what is known as a covariance matrix (Fig. 1B). Each element of the covariance matrix formed earlier, derived from the calculation of the complex conjugate product of all possible pairs, undergoes a filtering technique (e.g. the speckle noise filtering, among others). Note that in some embodiments, the filtering technique used can be adapted depending on the ratio between the horizontal and vertical spatial extent. For example, for most of the test sites, a 19x4 unitary normalized can be used. However, if the area is more squared a 7x7 to 9x9 could be used instead.

From all the filtered elements, all possible combinations of coherences are calculated following the expression in Fig. 1B. This generates what can be considered as a coherences stack. The result is a total of M coherence images. Subsequently, each of these M images is geocoded using a reference system (e.g. the EPSG:4328, among others).

To geocode the coherence stack, in an embodiment, the following procedure can be executed. First, a subproduct with just one acquisition is extracted from the stack or the deburst stack (if deburst was needed). This acquisition should contain two bands, and it is used the fact that each product contains VH and VV bands (each wave polarization available from the radar). Then, this subproduct with just one acquisition is modified with any external programming language software (Python for example) to create a lookup table to use as a reference for the posterior geocoding of the whole coherences stack. Once the lookup table is generated the product is again charged in the SNAP software and through the Geometric Terrain Correction option, the subproduct is geocoded. Once this single modified product is geocoded, the information from the geocoded look-up table is used to geocode the whole coherence stack.

According to the present invention, the execution sequence of the above-mentioned processes (geocoding or georeferencing the various SAR acquisitions, applying the orbital information, split operation, subset operation, etc.) can vary, without affecting the outcome or the process described above.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for estimating biophysical parameters of forests, the method comprising performing by one or more processors the following steps:
a) obtaining image acquisitions of a given area comprising forests from at least one data source, the image acquisitions comprising synthetic aperture radar, SAR, single look complex, SLC, images and being temporally spaced with each other;
b) generating a stack of geocoded coherences images by submitting the obtained image acquisitions to a multitemporal SAR data processing procedure;
c) selecting, for each geocoded coherence image in the generated stack, a number of sub-areas of the given area;
d) grouping each of the selected sub-areas into a plurality of sub-area geocoded coherence stacks;
e) spatially averaging each geocoded coherence image in the sub-area geocoded coherence stacks using a spatial averaging technique, obtaining a plurality of vectors as a result; and
f) computing a parameter that depends on forest biophysical parameters by executing a temporal decorrelation model on the obtained plurality of vectors.

2. The method of claim 1, wherein the computed parameter is a decay coefficient of the temporal decorrelation model, and the forest biophysical parameter comprises a forest height, an above-ground biomass or a growing stock volume.

3. The method of claim 1 or 2, wherein the temporal decorrelation model is a negative exponential model.

4. The method of any one of the previous claims, wherein the multitemporal SAR data processing procedure comprises:
generating a coregistered stack by preprocessing the obtained image acquisitions;
calculating the complex conjugate products of all pairs of preprocessed image acquisitions in the coregistered stack, generating a covariance matrix as a result;
filtering each element of the generated covariance matrix using a filtering technique;
generating a coherences stack of coherence images by calculating the coherence images using combinations of the filtered elements; and
geocoding the coherence images in the coherence stack using a reference system.

5. The method of claim 4, wherein the filtering technique comprises a speckle noise filter.

6. The method of claim 5, further comprising adapting the speckle noise filter depending on a ratio between a horizontal and vertical temporal extent of the image acquisitions.

7. The method of any one of the previous claims, wherein the spatial averaging technique comprises executing at least one of an arithmetical median and arithmetical mean.

8. The method of any one of the previous claims, wherein a temporal extent between each of the image acquisitions comprises a given number of hours, days, weeks, or months.

9. A computing system for estimating biophysical parameters of forests, comprising:
at least one memory; and
one or more processors, the one or more processors being configured to:
obtain image acquisitions of a given area comprising forests from at least one data source, the image acquisitions comprising synthetic aperture radar, SAR, single look complex, SLC, images and being temporally spaced with each other;
generate a stack of geocoded coherences images by submitting the obtained image acquisitions to a multitemporal SAR data processing procedure;
select, for each geocoded coherence image in the generated stack, a number of sub-areas of the given area;
group each of the selected sub-areas into a plurality of sub-area geocoded coherence stacks;
spatially averaging each geocoded coherence image in the sub-area geocoded coherence stacks using a spatial averaging technique, obtaining a plurality of vectors as a result; and
compute a parameter that depends on forest biophysical parameters by executing a temporal decorrelation model on the obtained plurality of vectors.

10. The computing system of claim 9, wherein the computed parameter is a decay coefficient of the temporal decorrelation model, and the forest biophysical parameter comprises a forest height, an above-ground biomass or a growing stock volume.

11. The computing system of claim 9 or 10, wherein the temporal decorrelation model is a negative exponential model.

12. The computing system of any one of the previous claims 9-11, wherein the spatial averaging technique comprises at least one of an arithmetical median and arithmetical mean.

13. The computing system of any one of the previous claims 9-12, wherein a temporal extent between each of the image acquisitions comprises a given number of hours, days, weeks, or months.

14. A non-transitory computer readable medium comprising code instructions that when executed by at least one processor of a computing system implement the method of any of claims 1 to 8.
